# EUROPÄISCHE PATENTANMELDUNG

(11) **EP 4 443 608 A1**
(43) Veröffentlichungstag der Anmeldung: **09.10.2024**
(21) Anmeldenummer: 24164855.9
(22) Anmeldetag: 20.03.2024
(51) Int. Cl.: H01M 10/613, H01M 10/625, H01M 10/653, H01M 10/6557, H01M 10/658, H01M 50/209, H01M 50/293, H01M 10/617

(54) **BATTERIEZELLENANORDNUNG MIT MINDESTENS ZWEI BATTERIEZELLEN, INSBESONDERE FÜR EIN FAHRZEUG**

(30) Priorität: 04.04.2023 DE 102023203130
(71) Anmelder: VOLKSWAGEN AG, 38440 Wolfsburg (DE)
(72) Erfinder: Bedürftig, Benjamin, 89077 Ulm (DE); Schaar, Bastian, 38116 Braunschweig (DE); Marks, Ina, 38104 Braunschweig (DE); Gaush, Anish, 38268 Lengede (DE); Veszelka, Zoltan, 38118 Braunschweig (DE)

(57) **Zusammenfassung**

Die Erfindung betrifft eine Batteriezellenanordnung mit mindestens zwei Batteriezellen (12), die durch mindestens ein zwischen den Batteriezellen (12) angeordnetes Trennelement (14) voneinander separiert sind, wobei an den Batteriezellen (12) und/oder an dem Trennelement (14) mindestens ein Mittel zur Verringerung der Wärmeübertragung von einer Batteriezelle (12) zu der nächsten Batteriezelle (12) vorgesehen ist, das bei erhöhter Batteriezelltemperatur wirksam wird.

## Beschreibung

Die Erfindung betrifft eine Batteriezellenanordnung mit mindestens zwei Batteriezellen gemäß dem Oberbegriff von Anspruch 1. Insbesondere betrifft die Erfindung eine Batteriezellenanordnung für ein Fahrzeug, wobei sich die Erfindung vor allem auf Fahrzeuge mit elektrischem Antrieb bezieht. Im Speziellen wird diesbezüglich auf Kraftfahrzeuge und Krafträder verwiesen.

In der Praxis sind üblicherweise eine Vielzahl von Batteriezellen zu einem sogenannten Antriebsenergiespeicher zusammengeschaltet. Dabei sind häufig zwischen zwei benachbarten Batteriezellen sogenannte Kompressionspads (compression pads) und/oder Kühlstrukturen angeordnet. Diese werden zum einen genutzt, um beim Verspannen der Batteriezellen eine mechanische Anfangsspannung aufzuprägen. Zum anderen ermöglichen die Kompressionspads während der Nutzung des Antriebsenergiespeichers das typischerweise auftretende Anschwellen (swelling) der Batteriezellen, welches insbesondere während einer intensiven Energieabgabe (Nutzzustand) und während der schnellen Energieaufnahme (Ladezustand) auftritt. Dabei sorgen die Kompressionspads dafür, dass sich der Druck zwischen den Batteriezellen und nach außen in Richtung eines äußeren Gehäuses, in welchem die Batteriezellen angeordnet sind, nicht signifikant erhöht. Wenn nur Kompressionspads zwischen den Batteriezellen angeordnet sind, erfolgt die Kühlung ausschließlich über die Unterseite und ggf. zusätzlich über die Oberseite der Batteriezellen (Top-Bottom-Kühlung).

Aus DE 10 2021 105 375 A1 ist eine Batteriekühlvorrichtung zur Kühlung mindestens einer Batteriezelle eines elektrisch betriebenen Fluggerätes bekannt, das eine erste Kühlvorrichtung zur Aufnahme einer ersten Wärmemenge bei einem Entladevorgang und eine zweite Kühlvorrichtung zur Aufnahme einer zweiten Wärmemenge von der Batteriezelle und der ersten Kühlvorrichtung aufweist. Die zweite Kühlvorrichtung ist von einem Kühlmittel befüllbar und durchströmbar. Dabei ist insbesondere ein flexibler Schlauch und/oder eine Kühlplatte als zweite Kühlvorrichtung vorgesehen, der dazu ausgestaltet sein kann, bei Durchströmung mit dem Kühlmittel mittelbar oder unmittelbar einen Anpressdruck auf die Batteriezelle auszuüben. Auf das Problem einer thermischen Propagation und auf Maßnahmen, die zur Vermeidung oder Verringerung von Schäden an Batteriezellen im Falle einer thermischen Propagation vorgesehen sind, wird nicht eingegangen.

Aus DE 10 2020 121 498 A1 und aus DE 10 2021 118 016 A1 sind eine Energiespeichervorrichtung zur Speicherung von elektrischer Energie, vorzugsweise für ein zumindest teilweise elektrisch angetriebenes Fahrzeug bekannt, die eine Mehrzahl von als Speicherzellen bezeichneten, stapelartig nebeneinander angeordneten Batteriezellen und eine Kühlvorrichtung zur Kühlung der Batteriezellen bekannt. Dabei weist die Kühlvorrichtung eine bodenseitig der Batteriezellen angeordnete, mit einem Kühlmittel durchströmbare Kühlplatte und ein weiteres, mit dem Kühlmittel durchströmbares Kühlelement auf, in einem Fall einen Kühlkörper, der zwischen zwei benachbarten Batteriezellen angeordnet ist, in dem anderen Fall eine einteilig ausgeführte Folienkühleinrichtung zur Seitenflächenkühlung. Auf das Problem einer thermischen Propagation und auf Maßnahmen, die zur Vermeidung oder Verringerung von Schäden an Batteriezellen im Falle einer thermischen Propagation vorgesehen sind, wird nicht eingegangen.

Die Erfindung betrifft nicht nur, aber auch Batteriezellenanordnungen wie die oben beschriebenen, bei welchen zwischen zwei benachbarten Batteriezellen eine aktive Wärmeabfuhr mittels einer Kühlvorrichtung möglich ist, sondern auch solche Batteriezellenanordnungen, in welchen benachbarte Batteriezellen durch ein sonstiges Trennelement voneinander separiert sind, insbesondere durch ein Kompressionspad.

Insbesondere betrifft die Erfindung Batteriezellenanordnungen von Batteriezellen, insbesondere von prismatischen Batteriezellen mit einem im Wesentlichen formstabilen Gehäuse. In diesem Zusammenhang wird insbesondere auf Batteriezellen mit seitlichen Terminals verwiesen, die über eine unterseitige Kühlvorrichtung gekühlt werden. Die Abfuhr der im Zellinneren entstehenden Wärme erfolgt in diesem Fall zunächst quer zur Elektrodenschichtung an das Zellgehäuse und dann entlang der Gehäusewände zu den an die Kühlvorrichtung angekoppelten Seitenflächen der Batteriezelle.

Der Erfindung liegt die Aufgabe zugrunde, eine Batteriezellenanordnung gemäß dem Oberbegriff von Anspruch 1 zur Verfügung zu stellen, mittels welcher im Falle einer drohenden oder bereits erfolgten thermischen Propagation einer Batteriezelle benachbarte Batteriezellen effizient vor Temperaturschäden geschützt sind.

Die Lösung der Aufgabe erfolgt erfindungsgemäß mit den Merkmalen des Anspruchs 1. Weitere praktische Ausführungsformen und Vorteile der Erfindung sind in Verbindung mit den abhängigen Ansprüchen beschrieben.

Eine erfindungsgemäße Batteriezellenanordnung umfasst mindestens zwei Batteriezellen, die durch mindestens ein zwischen den Batteriezellen angeordnetes Trennelement voneinander separiert sind. Dabei ist an den Batteriezellen und/oder an dem Trennelement mindestens ein Mittel zur Verringerung der Wärmeübertragung von der einen Batteriezelle über das Trennelement zu der anderen Batteriezelle vorgesehen, das bei erhöhter Batteriezelltemperatur wirksam wird. Die Grundidee der Erfindung ist es somit, mindestens ein Mittel zur Verringerung der Wärmeübertragung im Bereich zwischen zwei benachbarten Batteriezellen anzuordnen, dass auf einen außergewöhnlichen Temperaturanstieg einer Batteriezelle, die insbesondere auf eine sich anbahnende oder bereits erfolgte thermische Propagation zurückzuführen ist, derart auszulegen, dass die Wärmeübertragung von der einen Batteriezelle über das Trennelement zu der benachbarten Batteriezelle verringert ist. Unter einer erhöhten Batteriezelltemperatur im Sinne der Erfindung ist damit insbesondere eine Temperatur zu verstehen, die bei technisch einwandfreiem Batteriesystem und bestimmungsgemäßer Verwendung eines Batteriesystems mit einer erfindungsgemäßen Batteriezellenanordnung nicht erreicht würde. Ist beispielsweise bekannt, dass die Batteriezelle eines Kraftfahrzeuges mit einer erfindungsgemäßen Batteriezellenanordnung eine Maximaltemperatur von 150 °C erreicht, wird eine erhöhte Batteriezelltemperatur beispielsweise oberhalb von 150 °C festgelegt. Insbesondere kann in einem solchen Fall eine Temperatur von 170°, 180°, 190° oder 200° als erhöhte Batteriezelltemperatur definiert werden, bei welcher das mindestens eine Mittel zur Verringerung der Wärmeübertragung von einer Batteriezelle zu der nächsten Batteriezelle wirksam werden soll. Der Vollständigkeit halber wird darauf verwiesen, dass die erhöhte Batteriezelltemperatur auch sehr knapp an der Normaltemperatur orientiert sein kann und beispielsweise auf 151 °C, 155 °C oder 160 °C festgelegt werden kann. Durch Kombination mit einer gewissen Zeitdauer, über welche diese erhöhte Batteriezelltemperatur bestehen muss, um das Mittel wirksam werden zu lassen, kann die Funktionssicherheit einer erfindungsgemäßen Batteriezellenanordnung erhöht werden. So kann beispielsweise mittels empirischer Untersuchungen eine Vorgabe ermittelt werden, die mit einer ausreichend hohen Wahrscheinlichkeit eine sich anbahnende oder bereits erfolgte Propagation anhand der Batteriezelltemperatur und einer entsprechenden Zeitdauer festlegt.

In einer praktischen Ausführungsform einer erfindungsgemäßen Batteriezellenanordnung ist das Trennelement als Wärmeabfuhrelement ausgelegt. Darunter sind insbesondere Kühlvorrichtungen zu verstehen, mittels welchen Wärme aktiv aus dem Bereich zwischen zwei benachbarten Batteriezellen abgeführt werden kann. Diesbezüglich wird insbesondere auf Trennelemente mit entsprechenden Fluidkanälen verwiesen, durch welche ein Kühlfluid zum Zwecke der Wärmeabfuhr zumindest bedarfsweise geleitet werden kann. Ein Wärmeabfuhrelement im Sinne der Erfindung ist insoweit insbesondere ein Trennelement mit mindestens einem Hohlraum zur Durchleitung eines Kühlfluides.

Ein als Wärmeabfuhrelement ausgelegtes Trennelement kann insbesondere mit einer Kühlplatte oder mehreren Kühlplatten funktional gekoppelt sein, insbesondere mit einer unmittelbar unterseitig der Batteriezellen oder oberseitig der Batteriezellen angeordneten Kühlplatte. Mit einer funktionalen Kopplung sind zum einen passive Kühlplatten gemeint, die wärmeleitend miteinander verbunden sind. Insbesondere ist aber damit gemeint, dass eine aktive Kühlung, beispielsweise mittels eines Kühlfluides, das durch die Kühlplatte(n) geleitet wird, sich auch durch das Trennelement erstreckt, indem eine permanente oder bedarfsweise schaltbare fluidale Verbindung zwischen einer solchen Kühlplatte und (mindestens) einem in dem Trennelement ausgebildeten Kühlkanal hergestellt ist.

In einer weiteren praktischen Ausführungsform einer erfindungsgemäßen Batteriezellenanordnung ist als Mittel zur Verringerung der Wärmeübertragung das Trennelement zumindest in einem Teilbereich formveränderlich ausgebildet. Betreffend die Formveränderlichkeit im Sinne der Erfindung wird insbesondere auf die Möglichkeit verwiesen, ein oder mehrere in Längs- oder Querrichtung der Batteriezelle verlaufende Seiten verkürzbar auszubilden, indem das Trennelement bei erhöhter Batteriezelltemperatur in seiner Dickenrichtung dickenvariabel ausgebildet ist. Auf Möglichkeiten, eine solche Dickenvariabilität zu erzeugen, wird im Folgenden noch im Detail eingegangen. Ferner wird an dieser Stelle bereits auf die Möglichkeit verwiesen, mindestens eine sich in Hochrichtung des Trennelements erstreckende Seite des Trennelement derart formveränderlich auszubilden, dass die Seite zumindest über einen Teil ihrer Höhe einen Abstand zu der benachbart angeordneten Batteriezelle erzeugt, insbesondere indem eine sich in Hochrichtung erstreckende Wand des Trennelements eine nach innen gerichtete Wölbung oder sonstige nach innen orientierte Form annimmt.

In einer weiteren praktischen Ausführungsform einer erfindungsgemäßen Batteriezellenanordnung weist das Trennelement mindestens eine Innenstruktur auf, deren Kompressibilität bei steigender Temperatur in dem Trennelement erhöht ist. So kann beispielsweise ein Trennelement aus einer Tragstruktur gebildet sein, die abhängig von der Temperatur eine höhere Kompressibilität ermöglicht. So kann beispielsweise die Tragstruktur derart ausgelegt sein, dass bei Erreichen einer Temperatur von über 150 °C die Tragstruktur nachgiebig wird und dies aufgrund weiterer vorherrschender Rahmenbedingungen zu einer Verringerung der Breitenerstreckung des Trennelements führt. Eine solche Rahmenbedingung kann beispielsweise durch einen Fluiddruck durch das Trennelement vorgegeben sein, insbesondere wenn das Trennelement als Wärmeabfuhrelement ausgelegt ist. Dabei kann zur Unterstützung der Formveränderlichkeit der Innendruck eines Kühlfluides, welches durch das Trennelement geleitet wird, bei Erreichen einer bestimmten Temperatur in dem Trennelement verringert werden, so dass eine Kompression des Trennelements weiter gefördert wird.

In einer weiteren praktischen Ausführungsform einer erfindungsgemäßen Batteriezellenanordnung weist das Trennelement mindestens zwei zueinander relativbewegliche Teilelemente und/oder mindestens einen federelastisch komprimierbaren Kontraktionsbereich auf. Wenn mindestens zwei zueinander relativbewegliche Teilelemente vorgesehen sind, sind die Teilelemente vorzugsweise gegeneinander abgedichtet, so dass das Trennelement ohne funktionelle Nachteile auch als Wärmeabfuhrelement gestaltet sein kann. Als Beispiel für einen federelastisch komprimierbaren Kontraktionsbereich wird insbesondere auf sich in horizontaler Richtung erstreckende Seitenwände verwiesen, welche federartig ausgebildete Bereiche aufweisen oder über die vollständige Länge federelastisch ausgebildet sind.

In einer weiteren praktischen Ausführungsform einer erfindungsgemäßen Batteriezellenanordnung ist als Mittel zur Verringerung der Wärmeübertragung ein Steuerelement funktional mit dem Trennelement und/oder mit mindestens einer Batteriezelle derart gekoppelt, dass durch Betätigung des Steuerelements die Wärmeübertragung aktiv steuerbar oder regelbar ist. Als Beispiel für ein Steuerelement im Sinne der Erfindung wird insbesondere auf ein Druckerzeugungselement verwiesen, beispielsweise eine Pumpe, mittels welcher Kühlfluid durch Kühlkanäle geleitet wird, welche zumindest teilweise auch durch ein Trennelement geführt sind. So kann durch Steuerung der Pumpenleistung der Druck des durch das Trennelement strömenden Kühlfluides gesteuert werden und im Falle einer erwünschten Kompression zur Reduzierung der Wärmeübertragung der Druck reduziert werden.

In einer weiteren praktischen Ausführungsform einer erfindungsgemäßen Batteriezellenanordnung ist als Mittel zur Verringerung der Wärmeübertragung das Trennelement zumindest in einer Schicht hinsichtlich des Wärmeleitwertes strukturell veränderlich ausgebildet. Diesbezüglich wird insbesondere auf die Möglichkeit verwiesen, als Mittel zur Verringerung der Wärmeübertragung das Trennelement zumindest teilweise aus einem Matrix-Material herzustellen. So kann beispielsweise ein Matrixwerkstoff 1 mit eingelagerten Partikeln aus einem Werkstoff 2 kombiniert werden, wobei Werkstoff 1 und Werkstoff 2 verschiedene Werkstoffe sind. Die unterschiedliche thermische Ausdehnung der Werkstoffe 1 und 2 kann dann vorzugsweise so genutzt werden, dass die thermische Leitfähigkeit bei Überschreiten einer vorgegebenen Temperatur, insbesondere 150 °C, verringert wird. Weiter bevorzugt ist es, wenn das vorstehend beschriebene oder ein ähnliches Matrix-Material jeweils außenseitig von einer Metallschicht umgeben ist, um eine möglichst hohe Dichtheit des Trennelements zu erzielen.

In einer weiteren praktischen Ausführungsform einer erfindungsgemäßen Batteriezellenanordnung ist das Trennelement zumindest teilweise aus einem Bimetall gebildet, oder das Trennelement weist ein Teilelement aus einem Bimetall auf. Die Verwendung eines Bimetalls hat den Vorteil, dass mit einem solchen Element auf relativ einfache und kostengünstige Art und Weise eine Steuerung der Formveränderlichkeit bewirkt werden kann. Zusätzliche Elektronik oder sonstige Steuer- und Überwachungseinheiten sind in einem solchen Fall nicht erforderlich.

Die Erfindung betrifft auch eine Batteriezellenanordnung, bei welcher eine Vielzahl von Batteriezellen mit zumindest teilweise zwischen zwei benachbarten Batteriezellen angeordneten Trennelementen vorgesehen sind, die als Wärmeabfuhrelemente ausgebildet sind, wobei die Wärmeabfuhrelemente Fluidkanäle aufweisen, um Wärme aus dem Bereich zwischen zwei benachbarten Batteriezellen abzuführen. Dabei ist mindestens eine Steuereinheit vorgesehen und derart ausgebildet und funktional mit einer Kühlvorrichtung gekoppelt, dass die Wärmeabfuhr bedarfsweise partiell aktivierbar und/oder intensivierbar ist. In solchen Fällen können mit einer Kühlvorrichtung eine Vielzahl von Batteriezellen bedarfsweise gekühlt und durch geeignete Steuerung von Mitteln zur Verringerung der Wärmeübertragung vor einer Ausbreitung einer thermischen Propagation geschützt werden.

In einer weiteren praktischen Ausführungsform einer erfindungsgemäßen Batteriezellenanordnung sind zur bedarfsweisen Aktivierung mehrere Ventile zum selektiven Öffnen einzelner Kühlpfade vorgesehen, und/oder es ist mindestens ein Temperaturermittlungselement für die Ermittlung der Temperatur im Bereich mindestens einer Batteriezelle zwecks Steuerung mindestens eines Mittels zur Verringerung der Wärmeübertragung von einer Batteriezelle zu der nächsten Batteriezelle vorgesehen.

In Verbindung mit den beiden zuletzt genannten Batteriezellenanordnungen ist es besonders bevorzugt, wenn eine Temperaturermittlung entweder mit Hilfe von Temperatursensoren möglichst für eine Vielzahl von einzelnen Batteriezellen erfolgt. Alternativ oder in Ergänzung ist es möglich, eine batteriezellgenaue Temperaturermittlung mit Hilfe von thermischen 3D-Modellen durchzuführen und mit Hilfe dieser Modelle festzustellen, falls an einer bestimmten Batteriezelle ein Mittel zur Verringerung der Wärmeübertragung aktiviert werden soll.

Wenn mittels eines thermischen 3D-Modells und/oder mittels einer ausreichenden Zahl von Temperatursensoren, insbesondere mit einem Temperatursensor pro Batteriezelle, eine exakte Feststellung einer außergewöhnlichen Temperatur verortet werden kann, kann durch zielgerichtete Ansteuerung, Kühlung und Steuerung der Mittel zur Verringerung der Wärmeübertragung die Sicherheit einer erfindungsgemäßen Batteriezellenanordnung signifikant erhöht werden.

Weitere praktische Ausführungsformen der Erfindung sind nachfolgend im Zusammenhang mit den Zeichnungen beschrieben. Es zeigen:
- Figuren 1 und 2: eine erste Ausführungsform einer Batteriezellenanordnung in einem Normalzustand (Figur 1) und in einem Zustand, in welchem die mittlere Batteriezelle eine erhöhte Batteriezellentemperatur aufweist (Figur 2),
- Figur 3: eine weitere Ausführungsform einer Batteriezellenanordnung mit zwei nebeneinander angeordneten Batteriezellen und einem dazwischen angeordneten Trennelement, das strukturell veränderlich ausgebildet ist,
- Figuren 4a und 4b: den in Figur 3 mit IV gekennzeichneten Bereich des Trennelements in einem Normalzustand (Figur 4a) und in einem Zustand, in welchem die rechte Batteriezelle eine erhöhte Batteriezelltemperatur aufweist (Figur 4b),
- Figuren 5 und 6: eine erfindungsgemäße Batteriezellenanordnung mit einem Trennelement, das einen federelastisch komprimierbaren Kontraktionsbereich aufweist in einem Normalzustand (Figur 5) und in einem Zustand, in welchem mindestens eine der Batteriezellen eine erhöhte Batteriezelltemperatur aufweist (Figur 6),
- Figuren 7 und 8: eine weitere Ausführungsform einer Batteriezellenanordnung mit einem Trennelement, das zwei zueinander relativbewegliche Teilelemente aufweist, in einem Normalzustand (Figur 7) und in einem Zustand, in welchem mindestens eine der Batteriezellen eine erhöhte Batteriezelltemperatur aufweist (Figur 8),
- Figuren 9 und 10: eine weitere Batteriezellenanordnung mit einem Trennelement, das formveränderlich ausgebildet ist in einem Normalzustand (Figur 9) und in einem Zustand, in welchem die linke Batteriezelle eine erhöhte Batteriezelltemperatur aufweist (Figur 10),
- Figuren 11 und 12: eine weitere Batteriezellenanordnung mit einem Trennelement, das insoweit formveränderlich ausgebildet ist, als es in seiner Dicke variabel ist, in einem Normalzustand (Figur 11) und in einem Zustand, in welchem mindestens eine der Batteriezellen eine erhöhte Batteriezelltemperatur aufweist (Figur 12) und
- Figur 13: eine Batteriezellenanordnung mit einer Vielzahl von Batteriezellen mit zumindest teilweise zwischen benachbarten Batteriezellen angeordneten Trennelementen, die als Wärmeabfuhrelemente ausgebildet sind und Fluidkanäle aufweisen, um Wärme aus dem Bereich zwischen zwei benachbarten Batteriezellen abzuführen.

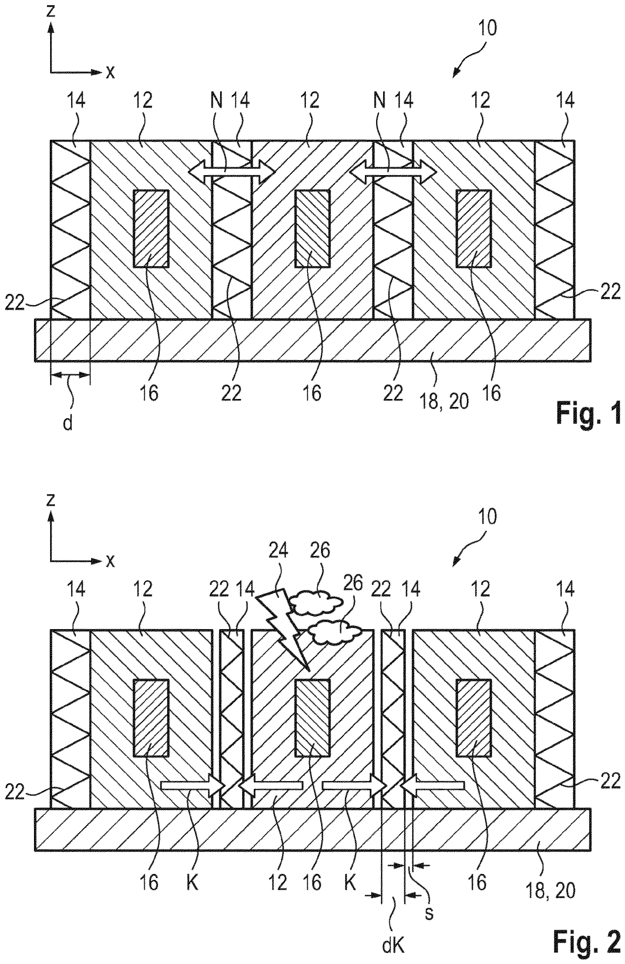

Figur 1 zeigt eine Batteriezellenanordnung 10 mit drei Batteriezellen 12, zwischen welchen Trennelemente 14 angeordnet sind. Zusätzlich sind auch jeweils außenseitig der jeweils äußeren Batteriezellen 12 weitere Trennelemente 14 vorgesehen, bei welchen es sich um optionale Trennelemente handelt. In Figur 1 und in allen weiteren Figuren sind mit Z die Fahrzeughochrichtung nach oben, mit X die Fahrzeuglängsrichtung und mit Y die Fahrzeugquerrichtung gekennzeichnet. Dementsprechend ist in Figur 1 erkennbar, dass sich an den Batteriezellen 12 jeweils seitlich Zellpole 16 befinden, die auch als Zellterminals bezeichnet werden. Ferner ist ersichtlich, dass die Batteriezellen 12 auf einer Kühlvorrichtung 18 in Form einer Kühlplatte 20 angeordnet sind. In dem in Figur 1 gezeigten Zustand weisen alle Batteriezellen 12 eine normale Temperatur auf, wie sie bei bestimmungsgemäßer Verwendung ohne technische Defekte der Batteriezellen 12 vorliegt. In diesem Zustand sind die Trennelemente 14 in dem expandierten Normalzustand, wie in Figur 1 durch die Doppelpfeile gekennzeichnet.

Wie in Figur 1 erkennbar ist, sind innerhalb der Trennelemente 14 Stege 22 angeordnet. Die Stege 22 sind v-förmig derart angeordnet, dass sie sich zickzackförmig jeweils über die gesamte Dicke d der Trennelemente 14 erstrecken. In dem in Figur 1 gezeigten Normalzustand tragen die Stege 22 zu einer ausreichenden Formstabilität der Trennelemente 14 bei.

Kommt es, wie in Figur 2 gezeigt, zu einer Temperaturerhöhung einer Batteriezelle 12, hier der mittleren Batteriezelle 12, was durch den Blitz 24 und die Wolken 26 symbolisiert ist, führt dies dazu, dass sich auch die Temperatur der Stege 22 erhöht. Die Stege 22 sind derart ausgelegt, dass bei Überschreiten einer gewissen Temperatur, insbesondere etwa 150 °C, die Formstabilität der Stege 22 und damit der gesamten Trennelemente 14 in Dickenrichtung abnimmt. Dies kann insbesondere durch die Auswahl eines geeigneten Materials für die Stege 22 und/oder durch einen Unterdruck erzeugt werden, welcher innerhalb der Trennelemente 14 wirkt, beispielsweise kann bei vorherrschen eines Unterdrucks und gleichzeitiger Temperaturerhöhung mit Reduzierung der Formstabilität der Stege 22 eine Kompression gemäß der Pfeile K in Figur 2 erzeugt werden. Dadurch ergibt sich eine komprimierte Dicke dK der Trennelemente 14. Dadurch ergibt sich ein Spalt s zwischen den Trennelementen 14 und den angrenzenden Batteriezellen 12. Aufgrund des entstehenden Spalts s, welcher vorzugsweise größer ist als 0,5 mm, weiter bevorzugt größer als 0,7 mm und besonders bevorzugt größer als 0,8 oder mindestens 1 mm, wird die Wärmeübertragung von der mittleren Batteriezelle 12 in Richtung der jeweils sich seitlich anschließenden Batteriezellen 12 verringert. Die Verringerung wird insbesondere durch den mindestens einen Spalt s bewirkt, welcher die Wärmeübertragung von der mittleren Batteriezelle 12 zu den benachbarten Batteriezellen 12 aufgrund der sich in dem Spalt s befindlichen Luft signifikant verringert.

Der Vollständigkeit halber wird darauf verwiesen, dass die in Verbindung mit den Figuren 1 und 2 beschriebene Anordnung innerhalb der Trennelemente 14 durch v-förmige Stege 22 nur exemplarisch ist. Es kann alternativ zu den Stegen 22 auch eine andere Tragstruktur innerhalb der Trennelemente 14 ausgebildet sein, oder das Trennelement 14 kann als solches einen konstruktiven Aufbau aufweisen, welcher die vorstehend anhand der Stege 22 beschriebene Funktionalität temperaturabhängig aufweist.

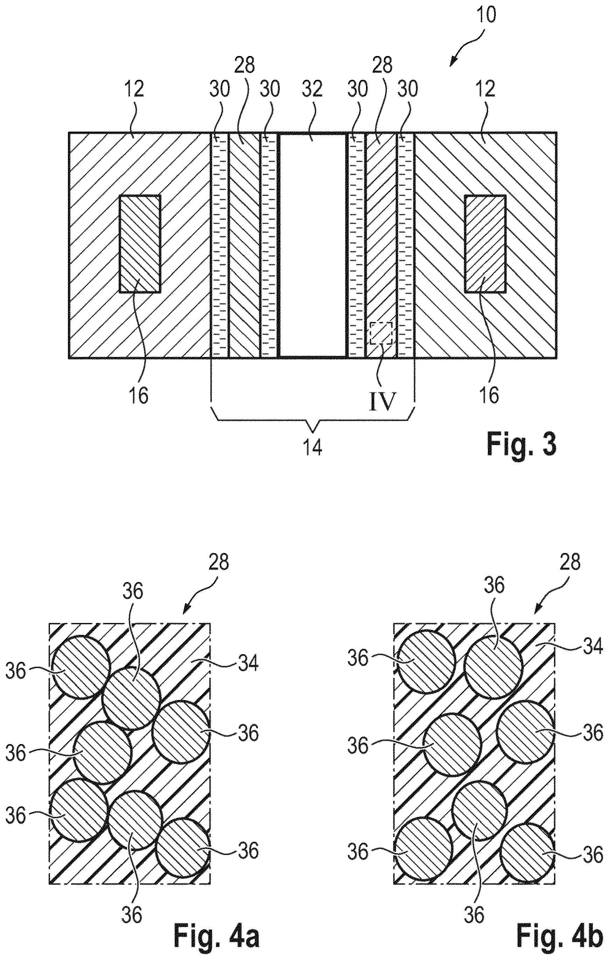

In den Figuren 3-13 werden weitere Ausführungsformen von Batteriezellenanordnungen beschrieben, wobei für identische oder zumindest funktionsgleiche Elemente die gleichen Bezugszeichen wie in den Figuren 1 und 2 verwendet werden.

In Figur 3 ist eine weitere Batteriezellenanordnung mit zwei Batteriezellen 12 gezeigt, die durch ein Trennelement 14 gebildet ist, das mehrere Teilelemente aufweist. Jeweils außenseitig des Trennelements 14 ist ein Matrix-Material 28 angeordnet, das von zwei Fluid-Trennschichten 30 umgeben ist. Die Fluid-Trennschichten 30 sind vorliegend aus einem metallischen Werkstoff hergestellt. Zwischen den inneren Fluid-Trennschichten 30 ist ein Kühlkanal 32 vorgesehen, durch welchen ein Kühlfluid (nicht gezeigt) hindurch leitbar ist, um Wärme abzuführen. In den Figuren 4a und 4b ist der in Figur 3 mit IV gekennzeichnete Bereich in einer vergrößerten Darstellung gezeigt. Aus den Figuren 4a und 4b ist ersichtlich, dass das Matrix-Material 28 zusammengesetzt ist aus einem Matrix-Grundwerkstoff 34 aus einem ersten Werkstoff und einzelnen Partikeln 36 aus einem zweiten Werkstoff.

In der gezeigten Ausführungsform handelt es sich bei dem Matrix-Grundwerkstoff 34 um einen Kunststoff. Die Partikel 36 sind aus einem metallischen Werkstoff hergestellt.

Im in Figur 4a gezeigten Normalzustand berühren sich die einzelnen Partikel 36, wodurch eine hohe thermische Leitfähigkeit und eine hohe Wärmeübertragung von einer Batteriezelle 12 zur nächsten Batteriezelle 12 resultiert.

Das Matrix-Material 28 ist so ausgelegt, dass bei Überschreiten einer gewissen Temperatur, beispielsweise 150°, sich die Partikel 36 voneinander separieren, so dass sich diese nicht mehr unmittelbar berühren. Dies ist in Figur 4b gezeigt. Dadurch sinkt die thermische Leitfähigkeit, und die Wärmeübertragung von einer Batteriezelle 12 zur benachbarten Batteriezelle 12 ist signifikant reduziert.

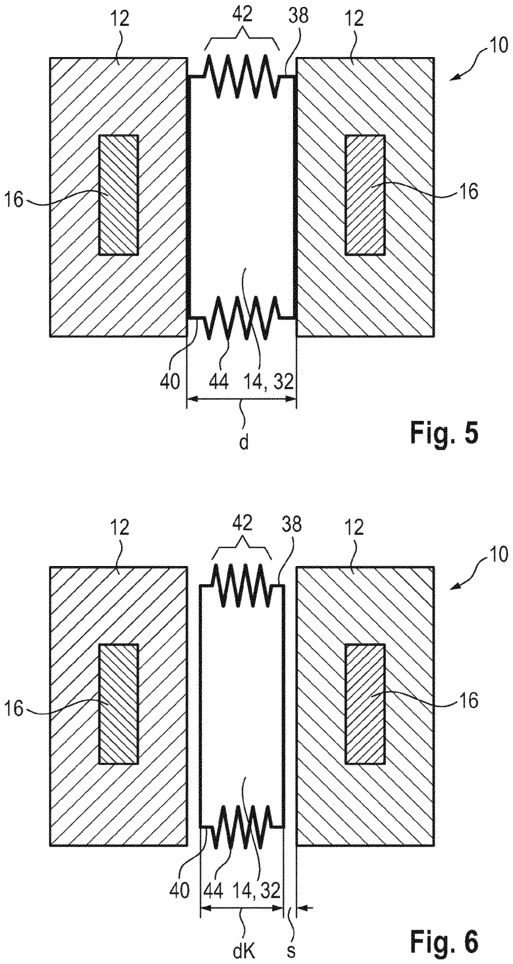

In den Figuren 5 und 6 ist eine weitere Ausführungsform einer Batteriezellenanordnung 10 mit zwei benachbarten Batteriezellen 12 und einem dazwischen angeordneten Trennelement 14 gezeigt. Figur 5 zeigt den Normalzustand. Figur 6 zeigt einen Zustand, in welchem die Batteriezelltemperatur mindestens einer der beiden Batteriezellen 12 erhöht ist.

Wie in Figur 5 ersichtlich ist, ist das Trennelement 14 wiederum als Wärmeabfuhrelement insoweit ausgelegt, als es einen Kühlkanal 32 umfasst. Die sich in Dickenrichtung erstreckende obere Seitenwand 38 und die korrespondierende untere Seitenwand 40 weisen einen federelastisch komprimierbaren Kontraktionsbereich 42 auf, was durch eine entsprechende Zickzacklinie 44 gekennzeichnet ist. Der federelastisch komprimierbaren Kontraktionsbereich 42 kann insbesondere durch Integration eines ziehharmonikaartig ausgebildeten, elastischen Abschnitts gebildet sein. Mit Hilfe eines nicht dargestellten, durch den Kühlkanal 32 strömenden Fluides kann durch die Einstellung des Massenstroms und den dadurch resultierenden Fluidruck durch das Trennelement 14 die Dicke entweder in den in Figur 5 gezeigten Normalzustand mit einer höheren Dicke d oder in den in Figur 6 gezeigten Zustand mit einer komprimierten Dicke dK verbracht werden. In dem in Figur 6 gezeigten komprimierten Dickenzustand ergibt sich wiederum ein Spalt s zwischen dem Trennelement 14 und den Batteriezellen 12, wodurch die Wärmeübertragung von einer Batteriezelle 12 zu der nächsten Batteriezelle 12 signifikant verringert ist.

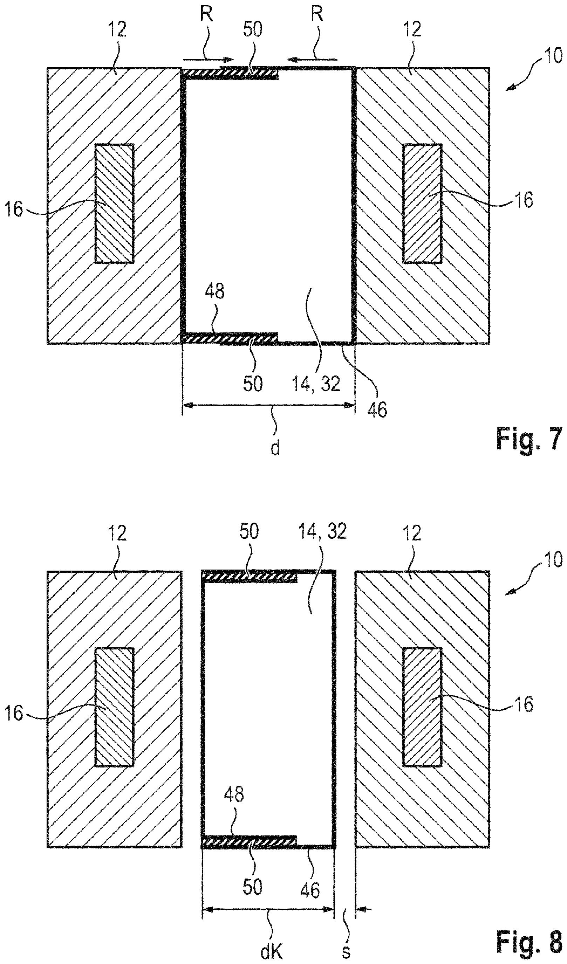

In den Figuren 7 und 8 ist eine weitere Ausführungsform einer Batteriezellenanordnung 10 mit zwei Batteriezellen 12 und einem zwischen den Batteriezellen 12 angeordneten Trennelement 14 gezeigt.

Das in den Figuren 7 und 8 gezeigte Trennelement 14 weist zwei zueinander relativ bewegliche Teilelemente 46, 48 auf, zwischen welchen in den jeweils aneinander angrenzenden Bereichen in Dickenrichtung jeweils eine Dichtung 50 angeordnet ist. Die Dichtung 50 erstreckt sich in dem gezeigten Ausführungsbeispiel über die gesamte Länge des sich in Dickenrichtung erstreckenden Schenkels des Teilelements 48. Auch bei dieser Ausführungsform ist das Trennelement 14 als Kühlkanal 32 ausgebildet. Die Relativbeweglichkeit der Teilelemente 46, 48 ist in Richtung der in Figur 7 mit R gekennzeichneten Pfeile möglich, so dass sich das Trennelement 14, wie in Figur 7 gezeigt, aus einer Dicke d in einen Zustand mit komprimierter Dicke dK, wie in Figur 8 gezeigt, formverändern lässt. Analog zu den vorstehend beschriebenen Varianten ergibt sich in diesem Fall wiederum einen Spalt s zwischen dem Trennelement 14 und den jeweils benachbarten Batteriezellen 12, wie in Figur 8 erkennbar ist. Die Relativbeweglichkeit kann im Ausführungsbeispiel gemäß den Figuren 7 und 8 insbesondere mit Hilfe eines Unterdrucks erzeugt werden, der über den Kühlkanal 32 eingebracht wird. Alternativ oder in Ergänzung können auch Stelleinrichtungen vorgesehen sein, mittels welchen eine Verfahrbarkeit der Teilelemente 46 und 48 relativ zueinander bewirkt wird. Dies ermöglicht es, die in den Figuren 7 und 8 gezeigte Ausführungsform auch dann zu realisieren, wenn in dem Trennelement 14 kein Kühlkanal 32 vorgesehen ist.

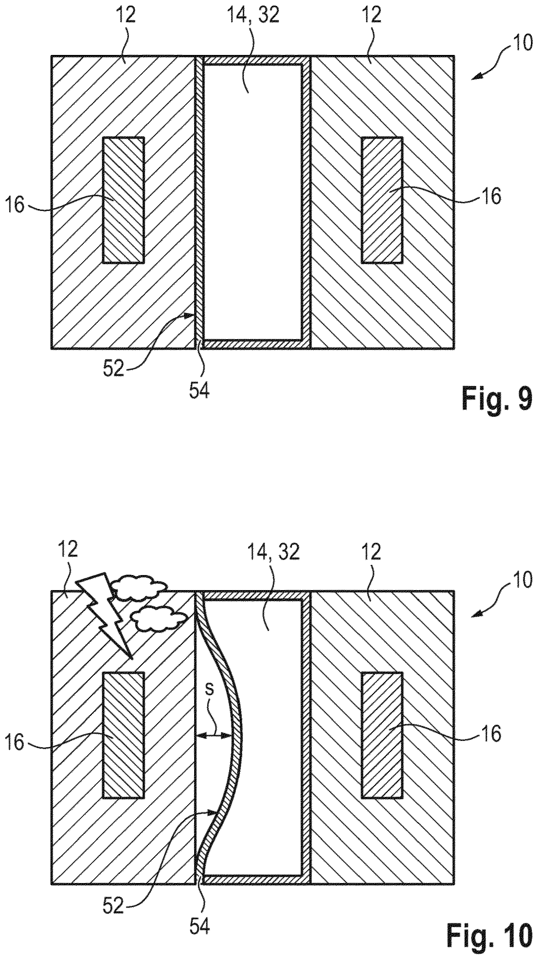

In den Figuren 9 und 10 ist eine weitere Ausführungsform einer Batteriezellenanordnung 10 mit zwei Batteriezellen 12 gezeigt, zwischen welchen ein Trennelement 14 angeordnet ist. Bei diesem Trennelement 14 ist exemplarisch die linke Seite 52 mit einem Teilelement 54 aus einem Bimetall ausgestattet. Das Teilelement 54 aus dem Bimetall ist derart ausgelegt, dass bei Überschreiten einer bestimmten Temperatur, beispielsweise 170°, das Bimetall einer Verformung der linken Seite 52 bewirkt, wie in Figur 10 dargestellt ist. Dadurch ergibt sich ein Spalt s zwischen dem Trennelement 14 und der linken Batteriezelle 12, welche an die Seite mit dem Teilelement 54 aus Bimetall angrenzend angeordnet ist. Diese Ausführungsform ist sehr einfach zu realisieren und unabhängig davon, ob innerhalb des Trennelements 14 ein Kühlkanal 32 vorgesehen ist, wie in den Figuren 9 und 10 dargestellt. Der Kühlkanal 32 ist daher bei dieser Ausführungsform unabhängig von der Funktion des Trennelements 14 und daher optional.

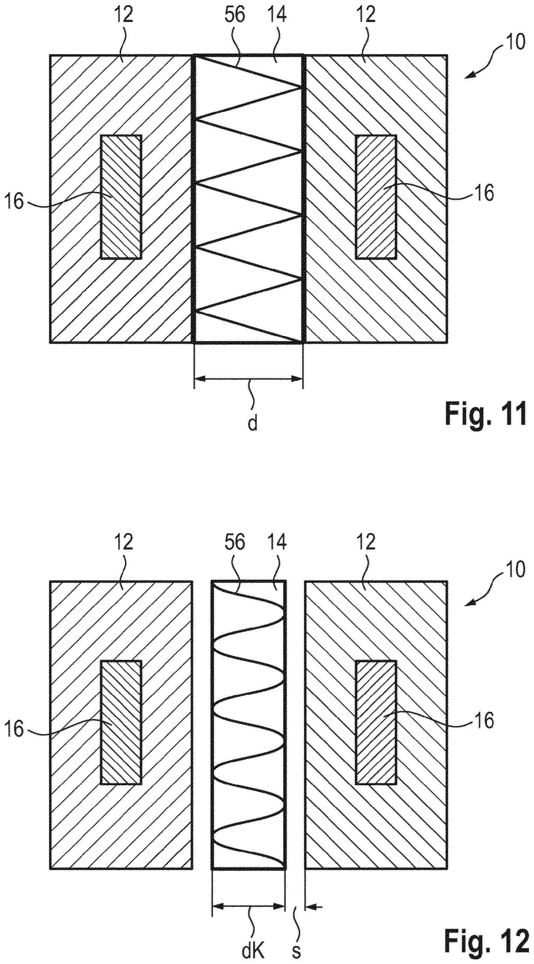

In den Figuren 11 und 12 ist eine weitere Batteriezellenanordnung 10 dargestellt. Zwischen zwei Batteriezellen 12 ist wiederum ein Trennelement 14 angeordnet. Das Trennelement 14 ist gebildet durch eine Tragstruktur 56, welche zumindest teilweise aus einem Bimetall gebildet ist. Die Tragstruktur 56 ist dazu ausgelegt, die in den Figuren 11 und 12 gezeigten Formen anzunehmen. Dabei zeigt Figur 11 den Normalzustand, in welchem das Trennelement 14 dazu ausgelegt ist, den Raum zwischen den zwei Batteriezellen 12 vollständig auszufüllen. In diesem Zustand weist das Trennelement 14 eine Dicke d auf.

Figur 12 zeigt den Zustand, welcher temperaturbedingt eintritt, wenn eine bestimmte Temperatur überschritten wird, beispielsweise 180°, und das Bimetall der Tragstruktur 56 diese Temperatur erreicht. Dann verringert sich die Dicke auf den Betrag dK und ist entsprechend reduziert. Dadurch bildet sich ein Spalt s zwischen dem Trennelement 14 und den benachbarten Batteriezellen 12 aus, wodurch die Wärmeübertragung von einer Batteriezelle 12 zu der nächsten Batteriezelle 12 signifikant reduziert ist.

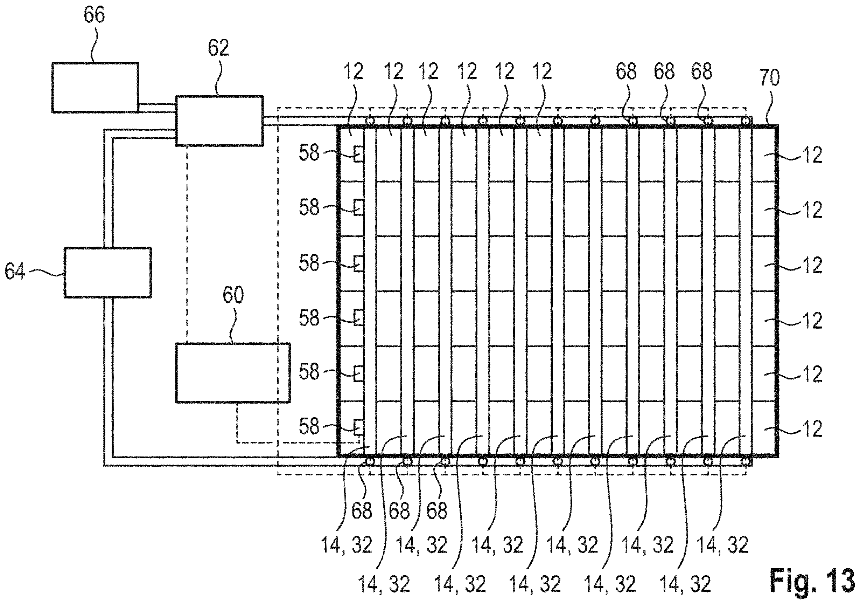

Figur 13 zeigt eine weitere Ausführungsform einer Batteriezellenanordnung 10 mit einer Vielzahl von Batteriezellen 12. Die Batteriezellen 12 sind in dieser Ausführungsform mehreren Reihen (hier in zwölf Reihen) angeordnet. Zwischen den Reihen sind jeweils Trennelemente 14 in Form von Kühlkanälen 32 vorgesehen. Exemplarisch sind an der ersten Reihe von Batteriezellen 12 Temperatursensoren 58 vorgesehen, die vorzugsweise an jeder Batteriezelle 12 vorgesehen sind. Alternativ kann die Temperatur jeder Batteriezelle 12 auch über ein 3D-Temperaturmodell mit Hilfe einer entsprechenden Simulation ermittelt werden.

Wenn wie in Figur 13 gezeigt, Temperatursensoren 58 vorgesehen sind, sind diese vorzugsweise funktional mit einer Steuereinheit 60 verbunden. Die Steuereinheit 60 ist wiederum funktional mit einer Pumpe 62 und mit einem Kühler 64 verbunden. Zusätzlich ist in der gezeigten Ausführungsform ein Reservoir 66 vorgesehen, um die Menge des Kühlfluides bedarfsweise zu erhöhen oder zu reduzieren.

Eingangs- und ausgangsseitig der zwischen den Batteriezellreihen führenden Kühlkanäle 32 sind Ventile 68 angeordnet, die bedarfsweise geöffnet, geschlossen oder nur teilweise geöffnet werden können.

Alle Batteriezellen 12 sind in einem Batteriegehäuse 70 angeordnet, wobei das Batteriegehäuse 70 vorzugsweise ein Metallgehäuse ist, um Wärme vorteilhaft auch über das Gehäuse nach außen abführen zu können.

Die in Figur 13 gezeigte Ausführungsform dient zur Visualisierung, wie mit Hilfe einer Steuereinheit 60 der Druck eines Kühlfluides zwischen zwei benachbarten Batteriezellen 12 jeweils variiert werden kann, um die Dicke des jeweiligen Trennelements 14 variieren zu können.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

### Bezugszeichenliste

- 10: Batteriezellenanordnung
- 12: Batteriezelle
- 14: Trennelement
- 16: Zellpol
- 18: Kühlvorrichtung
- 20: Kühlplatte
- 22: Steg
- 24: Blitz
- 26: Wolke
- 28: Matrix-Material
- 30: Fluid-Trennschicht
- 32: Kühlkanal
- 34: Matrix-Grundwerkstoff
- 36: Partikel
- 38: obere Seitenwand
- 40: untere Seitenwand
- 42: Kontraktionsbereich
- 44: Zickzacklinie
- 46: Teilelement
- 48: Teilelement
- 50: Dichtung
- 52: linke Seite
- 54: Teilelement
- 56: Tragstruktur
- 58: Temperatursensoren
- 60: Steuereinheit
- 62: Pumpe
- 64: Kühler
- 66: Reservoir
- 68: Ventil
- 70: Batteriegehäuse
- N: expandierter Normalzustand
- K: komprimierter Zustand
- R: Pfeil
- d: Dicke des Trennelements im Normalzustand
- dK: Dicke des Trennelements im komprimierten Zustand
- s: Spalt

## Patentansprüche

1. Batteriezellenanordnung mit mindestens zwei Batteriezellen (12), die durch mindestens ein zwischen den Batteriezellen (12) angeordnetes Trennelement (14) voneinander separiert sind,
**dadurch gekennzeichnet,**
**dass** an den Batteriezellen (12) und/oder an dem Trennelement (14) mindestens ein Mittel zur Verringerung der Wärmeübertragung von einer Batteriezelle (12) zu der nächsten Batteriezelle (12) vorgesehen ist, das bei erhöhter Batteriezelltemperatur wirksam wird.

2. Batteriezellenanordnung nach dem vorstehenden Anspruch, **dadurch gekennzeichnet, dass** das Trennelement (14) als Wärmeabfuhrelement ausgelegt ist.

3. Batteriezellenanordnung nach einem der vorstehenden Ansprüche, **dadurch gekennzeichnet, dass** als Mittel zur Verringerung der Wärmeübertragung das Trennelement (14) zumindest in einem Teilbereich formveränderlich (insbesondere in seiner Dickenrichtung zwischen den Batteriezellen (12) dickenvariabel) ausgebildet ist.

4. Batteriezellenanordnung nach dem vorstehenden Anspruch, **dadurch gekennzeichnet, dass** das Trennelement (14) mindestens eine Innenstruktur (insbesondere eine Tragstruktur) aufweist, dessen Kompressibilität bei steigender Temperatur in dem Trennelement (14) erhöht ist.

5. Batteriezellenanordnung nach einem der beiden vorstehenden Ansprüche, **dadurch gekennzeichnet, dass** das Trennelement (14) mindestens zwei zueinander relativbewegliche Teilelemente (46, 48) und/oder mindestens einen federelastisch komprimierbaren Kontraktionsbereich (42) aufweist.

6. Batteriezellenanordnung nach einem der vorstehenden Ansprüche, **dadurch gekennzeichnet, dass** als Mittel zur Verringerung der Wärmeübertragung eine Steuereinheit (60) (insbesondere Druckerzeugungselement) funktional mit dem Trennelement (14) und/oder mit mindestens einer Batteriezelle (12) derart gekoppelt ist, dass durch Betätigung der Steuereinheit (60) die Wärmeübertragung aktiv steuerbar oder regelbar ist.

7. Batteriezellenanordnung nach einem der vorstehenden Ansprüche, **dadurch gekennzeichnet, dass** als Mittel zur Verringerung der Wärmeübertragung das Trennelement (14) zumindest in einer Schicht hinsichtlich des Wärmeleitwertes strukturell veränderlich ausgebildet ist.

8. Batteriezellenanordnung nach einem der vorstehenden Ansprüche, **dadurch gekennzeichnet, dass** das Trennelement (14) zumindest teilweise aus einem Bimetall gebildet ist oder mindestens ein Teilelement (46, 48) aus einem Bimetall aufweist.

9. Batteriezellenanordnung nach einem der vorstehenden Ansprüche, **dadurch gekennzeichnet, dass** eine Vielzahl von Batteriezellen (12) mit zumindest teilweise zwischen zwei benachbarten Batteriezellen (12) angeordneten Trennelementen (14) vorgesehen sind, die als Wärmeabfuhrelemente ausgebildet sind, **dadurch gekennzeichnet, dass** die Wärmeabfuhrelemente Fluidkanäle aufweisen, um Wärme aus dem Bereich zwischen zwei benachbarten Batteriezellen (12) abzuführen, wobei mindestens eine Steuereinheit (60) vorgesehen und derart ausgebildet und funktional mit einer Kühlvorrichtung gekoppelt ist, dass die Wärmeabfuhr bedarfsweise partiell aktivierbar und/oder intensivierbar ist.

10. Batteriezellenanordnung nach dem vorstehenden Anspruch, **dadurch gekennzeichnet, dass** zur bedarfsweisen Aktivierung mehrere Ventile (68) zum selektiven Öffnen einzelner Kühlpfade vorgesehen sind und/oder mindestens ein Temperaturermittlungselement für die Ermittlung der Temperatur im Bereich mindestens einer Batteriezelle (12) zwecks Steuerung mindestens eines Mittels zur Verringerung der Wärmeübertragung von einer Batteriezelle (12) zu der nächsten Batteriezelle (12) vorgesehen ist.
